# EUROPEAN PATENT APPLICATION

(11) **EP 4 144 209 A1**
(43) Date of publication of application: **08.03.2023**
(21) Application number: 22192735.3
(22) Date of filing: 30.08.2022
(51) Int. Cl.: A01K 31/00, B65D 1/24, B65D 85/50, B65D 88/16, A01K 45/00

(54) **CONTAINER FOR HOLDING THEREIN LIVE POULTRY, FOR TRANSPORTING THE POULTRY**

(30) Priority: 03.09.2021 NL 2029120
(71) Applicant: Marel Poultry B.V., 5831 AV Boxmeer (NL)
(72) Inventor: VAN DEN AKER, Marcel, BOXMEER (NL); VAN DEN BERG, Joep, BOXMEER (NL); KROOT, Marc, BOXMEER (NL); VERGELDT, Jeroen, BOXMEER (NL)
(74) Representative: Algemeen Octrooi- en Merkenbureau B.V.

(57) **Abstract**

The invention provides a container for holding therein live poultry, for use in the transport of live poultry, configured to be stackable, having a bottom wall, side walls and an open upper side, the bottom wall and side walls defining a receiving space for the live poultry, wherein the bottom wall has multiple bottom wall segments which can be moved such that the bottom wall is partially opened, wherein at least one of the side walls has a movable side wall segment which is connected to one of the movable bottom wall segments such that they can be moved together to open a side wall at least partially. The container has a divider for dividing the receiving space in at least two subspaces, the divider having a divider element extending between the movable side wall segment and a side wall opposite said movable side wall segment.

## Description

The invention relates to a container for holding therein live poultry, for transporting the poultry. The invention also relates to a divider for such a container, an to the use of such a divider.

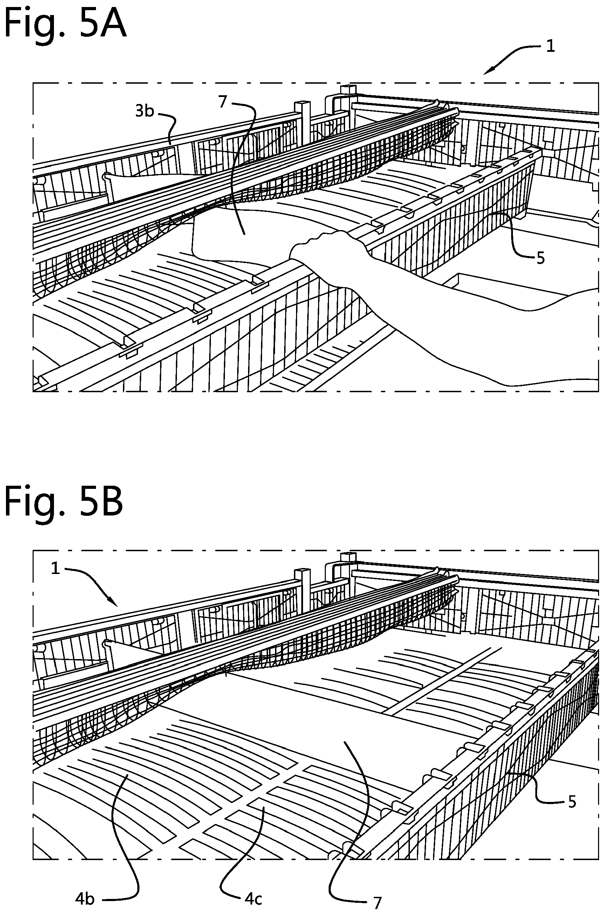

WO 2016/064270 relates to such a container, also referred to as a crate. As in particular the embodiment according to figures 5A to 6B show, the containers each have a bottom wall which is divided into wall sections that can be moved aside to as to put the bottom wall in an open condition in order to be able to access a lower container via a higher container in the stack. First, multiple containers can be stacked, the bottom walls of one or more of the containers, preferably all but the lowest container in the stack, can be put in the open condition, after which live poultry can be placed in the lowest container, wherein the bottom wall of the one-but-lowest container can be gradually brought back to a closed condition thereof, closing off the lowest container so that the poultry cannot escape. This course of actions is repeated until all containers in the stack are filled with poultry, after which the uppermost container can be closed off at a top side thereof such by a cover element.

Although such containers function satisfactorily in practice, they can be further improved regarding the stability of the container, in use when part of a stack of such containers, when holding therein live poultry, such as, typically, tens of chicken.

It is an object of the invention to provide an improved container for holding therein live poultry. It is a further object of the invention to provide a container for holding therein live poultry, the container having an improved stability during use in a stack of multiple of such containers and while holding therein live poultry. It is still a further object of the invention to improve animal welfare and increase yield.

One or more of the objects are achieved by the container according to the present invention, for holding therein live poultry, for use in the transport of live poultry, wherein the container is configured to be stackable so as to form a stack of multiple of such containers, the container having a bottom wall, side walls and an open upper side, the bottom wall and side walls defining a receiving space for the live poultry, wherein the bottom wall has multiple bottom wall segments which can be moved such that the bottom wall is partially opened, wherein at least one of the side walls has a movable side wall segment which is connected to one of the movable bottom wall segments such that the movable side wall segment can be moved together with that movable bottom wall segment such that said one of the side walls is at least partially opened, wherein the container has a divider for dividing the receiving space in at least two subspaces, the divider having a divider element extending between two opposite side walls of the side walls of the container.

The container is for use in the transport of live poultry. Typically, stacks of a number of such containers, such as five containers, are made, wherein live poultry is loaded into the containers starting from the lowermost container while the remaining containers are in an opened, or, loading condition in which the bottom wall is partially opened and said one of the side walls is at least partially opened. After the desired number of animals have been loaded into the lowermost container, the container directly resting thereon is closed, which means that the bottom wall is closed and thereby also the side wall having the movable side wall segment. The bottom wall of this latter container completely closes off the lowermost container so that the animals cannot escape therefrom. This process is repeated until all containers of the stack are loaded with animals, wherein a cover is placed on top of the uppermost container to completely close off the uppermost container.

An effect of the container according to the invention is that because of the provision of the divider, a more stable container and consequently also a more stable stack of containers are realized. This is because during transport of such containers, typically via road transport on a trailer, the poultry held by the containers will no longer be able to move within the entire receiving space, but only within one of the subspaces. As a result, the weight distribution of poultry within a container fluctuates less, in particular when the trailer takes a turn, in particular a tight turn or a high-speed turn, or must make an evasive maneuver so as to avoid a collision. In such situations the chance of stacks of containers tipping over will be reduced. Also, animal welfare is improved because there is less chance of animal injury in such exceptional situations which also has a positive effect on the yield.

The divider element extends between the movable side wall segment and a side wall opposite said movable side wall segment. This way, it can be achieved in an easy manner that the divider element does not interfere with a movement of the movable side wall segment, in particular in case of a flexible divider element. The movable side wall segment is preferably configured to be movable towards and away from the opposite side wall.

In an embodiment, the container has exactly one divider, which divides the receiving space in half, or at least about in half, that is, it divides the receiving space in two subspaces.

In an embodiment, the divider element extends over a height at least equal to half a height of the container. The height of the container may be in the range of 10 to 50 cm, preferably between 20 and 40 cm. Since the containers have an open upper side, in use of the container in a stack of such containers, the height of the receiving space can be regarded as being the height of the container.

In an embodiment, the divider element is flexible. A flexible divider element can be made very robust and therefore contributes to the durability of the entire container. The flexible divider element may be formed by at least one flexible flat belt, and/or may be formed by multiple flexible lines, or, cables, preferably three lines such as round belts. The multiple flexible lines may be spaced apart at most by 10 cm, preferably less than 5 cm, between each two neighbouring lines. The lines may have a circular cross section. The lines may alternatively have a rectangular or square or oval or other cross section. The flexible belt(s) may be synthetic belt(s) with a polyester tension layer. Such a belt is relatively stiff in the plane of the belt, yet flexible in directions outside the plane of the belt. The flexible lines may be polymer lines such as a synthetic line, such as TPU Polyether. Such a lines, which may be formed as round belts, are flexible, elastic, oil and abrasion resistant.

In an embodiment, the flexible divider element may be formed by a single flexible flat belt which preferably extends over at least 65% of the height of the container. The provision of a single belt is cost efficient and easy to maintain and replace.

In an embodiment, although less preferable from a hygienic point of view, the belt(s) or cables may be spooled on a reel attached to one of the movable side wall segment and said opposite side wall. In another embodiment, the flexible divider element may be formed or comprise a net. In other embodiments, the divider element may be a length-adjustable beam or length-adjustable plate. The length-adjustable plate may have at least two plate parts slidable alongside each other. The divider element may be telescopic or in the form of a bellows.

In still another embodiment the divider element may be formed by a fixed plate, or fixed bars for example or the like, which are attached to the opposite wall with one end thereof and which, at the side of the movable wall segment, protrudes through a passage in the movable wall segment, so that upon moving the movable wall segment towards the opposite side wall, the movable wall segment just moves along the plate which protrudes with an increasing part thereof through the movable wall segment.

In an embodiment in which the flexible divider element comprises multiple spaced apart flexible flat belts or multiple flexible lines, the divider may have at least one separator which connects said multiple flat belts or lines together at at least one intermediate position along a length of the flexible divider element, so as to maintain said multiple flat belts or lines apart at a predefined mutual distance.

In an embodiment, the divider comprises a first attachment element for removably attaching the divider to a side wall, in an embodiment to the movable side wall segment, and comprises a second attachment element for removably attaching the divider to the opposite side wall, wherein the divider element is attached at one end thereof to the first attachment element and at an opposite, second end thereof to the second attachment element. The provision of such attachment elements make it more easy to quickly mount a divider to a container in a robust manner.

In an embodiment, the first and/or the second attachment element comprise a hook-shaped element for hooking behind a part of respective side walls, in an embodiment behind a part of the movable side wall segment or opposite side wall, respectively. The provision of hook-shaped elements allow for a very quick and intuitive mounting of the attachment element.

In an embodiment, the first and/or the second attachment element additionally comprise a deformable lip shaped element which can be deformed such that it protrudes into a side wall, in an embodiment in the movable side wall segment or opposite side wall respectively, such as in a cavity therein, and preferably after hooking the first and/or the second attachment element to a respective side wall, in an embodiment to the movable side wall segment or opposite side wall respectively. This way, by means of only a very simple action by an individual, the attachment element can be effectively attached to a side wall. Alternatively or in addition to the mentioned hook-shaped element, optionally instead of the mentioned deformable lip(s), the first and/or second attachment element may comprise a provision for attaching it to a side wall or side wall segment by means of a nut and bolt connection, or the like. The deformable lip may be plastically deformable, or elastically deformable so that it may act as a snap connection.

In an embodiment, the container has a metal framework having four upstanding posts at four corners of the bottom, which bottom is rectangular or square, the posts being connected together by frame bars at least along said opposite side wall.

In an embodiment, the bottom wall and/or side walls comprise polymer grid like panels. Such panels are light-weight, provide for a substantial ventilation through the container, and may be provided removably such that they can be easily replaced at low cost.

Between posts, frame bars and/or bottom wall polymer grid like panels may be provided, preferably wherein the movable side wall segment also has at least one polymer grid like panel.

In an embodiment the movable side wall segment and the bottom wall segment to which it is connected, are made as one integral component, preferably from polymer, in a grid-like form.

In an embodiment wherein the opposite side wall at least has such a frame bar along an edge of the container between the bottom wall and the opposite side wall, and along an upper side of the opposite side wall, said frame bars may have pins onto which such a grid like panel can be mounted in a removable manner.

The second attachment element may comprise a mentioned hook-shaped element for hooking behind a part of the opposite side wall, the pins forming said part of the opposite side wall.

In an embodiment, at least some, such as two of the multiple bottom wall segments are designed such that they slide on top of each other upon moving the movable side wall segment in the direction of the opposite side wall.

The invention also relates to a divider configured for a container according to the invention as described above, for dividing the receiving space of the container in at least two subspaces, the divider having a divider element configured to extend between two opposite side walls of the side walls of the container during use.

In an embodiment of the divider, the divider element is flexible and is formed by at least one flexible flat belt and/or is formed by multiple flexible lines such as round belts, wherein the divider comprises a first attachment element for removably attaching the divider to a side wall and comprises a second attachment element for removably attaching the divider to an opposite side wall of the container, wherein the divider element is attached at one end thereof to the first attachment element and at an opposite, second end thereof to the second attachment element, wherein the first and/or the second attachment element comprise a hook-shaped element for hooking behind a part of the respective side wall, wherein the first and/or the second attachment element additionally comprise a deformable lip shaped element which can be deformed such that it can, in use, protrude into the respective side wall.

The invention also relates to the use of a divider according to the invention, in a container according to the invention, for dividing the receiving space of the container in at least two subspaces.

Embodiments of the container according to the invention are applicable to the divider and the use thereof according to the invention as well. Effects mentioned in relation to the container according the invention apply to the divider and the use thereof in an analogous manner.

The present invention is described hereinafter with reference to the accompanying figures in which embodiments of the present invention are shown and in which like reference numbers indicate the same or similar elements.
Figure 1a shows, in 3-dimensional view, a first example of a container according to the invention;
Figure 1b shows, in 3-dimensional view, a second example of a container according to the invention;
Figure 2a shows, in 3-dimensional view, a divider of the container of figure 1a;
Figures 2b to 2e and figures 3a to 3f show, in different 3-dimensional views, different parts of the divider of figure 2a;
Figure 4a shows, in 3-dimensional view, a divider of the container of figure 1b;
Figure 4b shows an optional part of the divider of figure 4a;
Figure 4c shows a part of the divider of figure 4a; and
Figures 5a and 5b show the container of figure 1a in two different conditions.

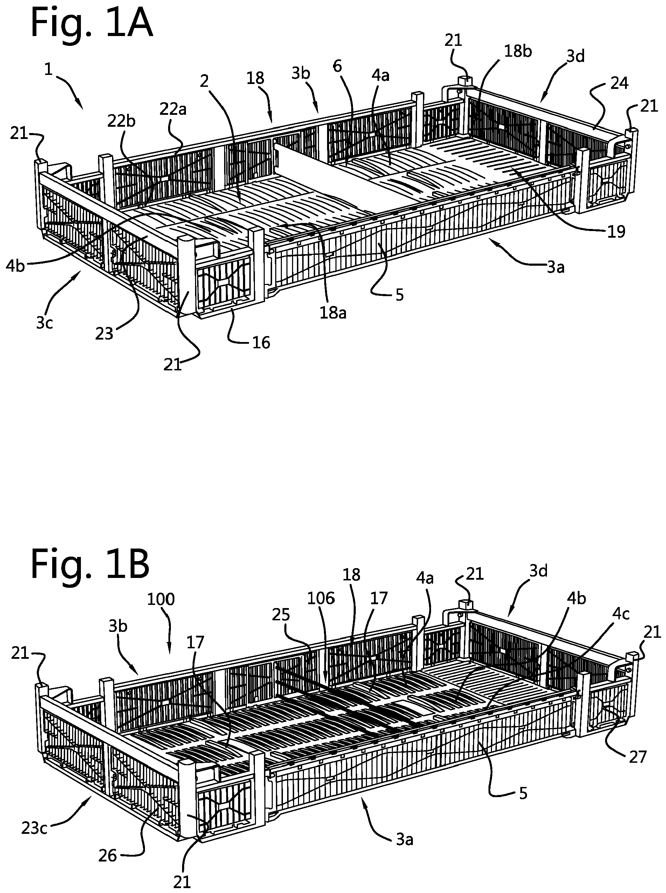

Figure 1a shows a container 1 for holding therein live poultry, for use in the transport of live poultry. The container is embodied as a crate. The live poultry may be live chicken, ducks or turkeys for example. The container is configured to be stackable so as to form a stack of multiple of such containers as generally described in WO 2016/064270 for a similar container albeit without the inventive divider according to the invention as will be further detailed below. Stacks of such containers are loaded with the poultry and transported such as via road transport as explained above.

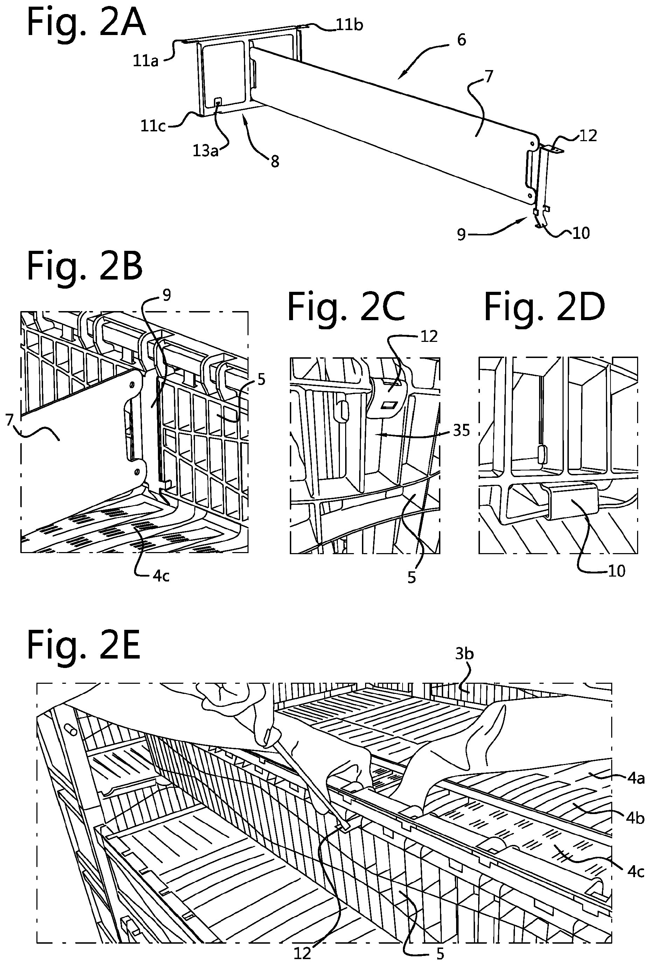

The container 1 has a bottom wall 2, side walls 3a-3d and an open upper side 19, the bottom wall and side walls defining, i.e. bounding, a receiving space 18 for the live poultry. The bottom wall 2 has three bottom wall segments 4a-4c and two remaining, smaller bottom wall parts adjacent side walls 3c and 3d, aside the segments 4a-4c. bottom wall segments 4b and 4c can be moved, such that the bottom wall 2 is partially opened. One of the side walls 3a has a movable side wall segment 5 which is connected to movable bottom wall segment 4c, and such that the movable side wall segment can be moved together with that bottom wall segment such that said side wall 3a can at least partially be opened. The bottom wall segments 4b and 4c can be moved by letting them slide on top of each other, and both on top of the bottom wall segment 4a which is furthest from the movable side wall segment 3a, upon moving the movable side wall segment 5 in the direction of the opposite side wall 3b. For this purpose the bottom wall segments may have guides 17 for mutually guiding the bottom wall segments to slide on top of each other. Figures 2e and 5a show the container 1 in a partially opened condition in which the movable wall segment 5 has been moved towards the opposite side wall 3b. As shown, the side wall 3a and bottom wall 2 are now opened and a container below is accessible for loading poultry therein. Figure 5b shows the container 1 in the closed condition. Although in figure 5b the container underneath is still opened, during use this container, loaded with poultry, will be closed as well.

The container has a metal, more specifically stainless steel, frame 16 having four upstanding posts 21 at four corners of the bottom wall 2, which bottom wall is rectangular or square, the posts 21 being connected together by frame bars along said opposite side wall 3b and both other walls 3c, 3d that extend between the one side wall 3a having the movable side wall segment 5, and the opposite side wall 3b. In figure 1a only a few of the frame bars, being frame bar 22a, 22b, 23 and 24 are given a reference sign by means of example. Between the posts, frame bars and/or bottom wall, polymer grid like panels of the corresponding walls are provided. Only a few panels, being panels 25, 26 and 27 are given a reference sign by means of example.

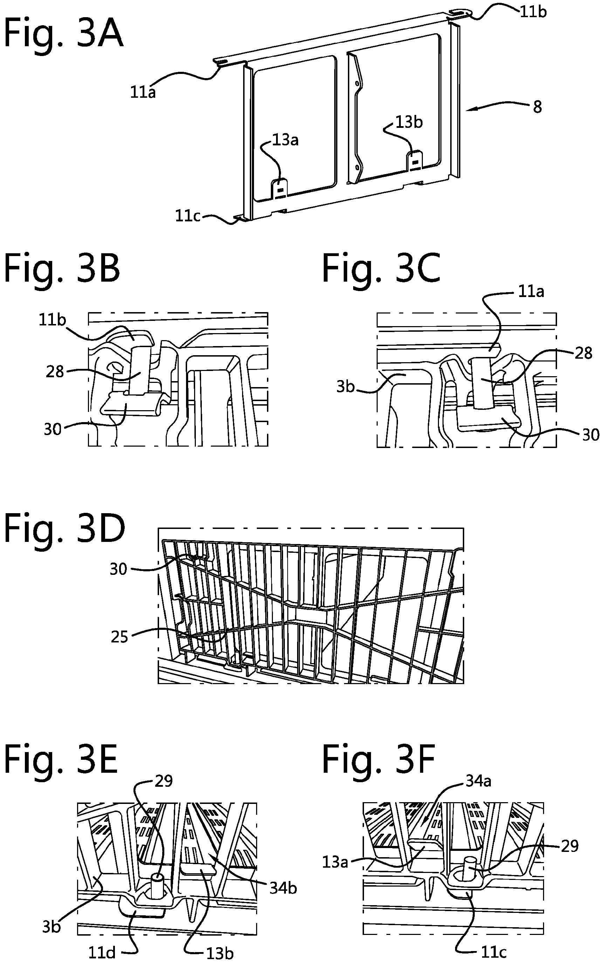

The movable side wall segment 5 also has at least one polymer grid like panel. The opposite side wall 3b has such a frame bar 22b along an edge of the container between the bottom wall 2 and the opposite side wall 3b, and a frame bar 22a along an upper side of the opposite side wall 3b, said frame bars having pins 28, 29 onto which such a grid like panel can be mounted in a removable manner. This is shown in figures 3b-3f. As shown, a panel is positioned over two upward extending pins 29 on a frame bar 22b along the edge of the container between the bottom wall and the opposite side wall. Then, the panel can easily be snapped onto two downward extending pins 28 on the frame bar 22a along an upper side of the opposite side wall. The snap connections 30 make a very easy removal of the panel possible.

In accordance with the invention, the container 1 has one divider 6 for dividing the receiving space 18 in two equal subspaces 18a, 18b. The divider 6 has a divider element 7 extending between the movable side wall segment 5 and a side wall 3b opposite said movable side wall segment. The divider element extends over about 75% of the height of the container.

Figure 1a and figure 1b show identical containers 1 and 100, respectively, except for the divider. In the container 1 of figure 1a the divider element 7 of divider 6 is one flexible flat belt, while in the container 100 of figure 1b the divider element 107 of divider 106 is formed by a number of three round belts 170. The level of detail of container 1 in figure 1a might appear higher than that of container 100 of figure 1b, however, the containers are identical, as said except for the divider 6 and 106, respectively.

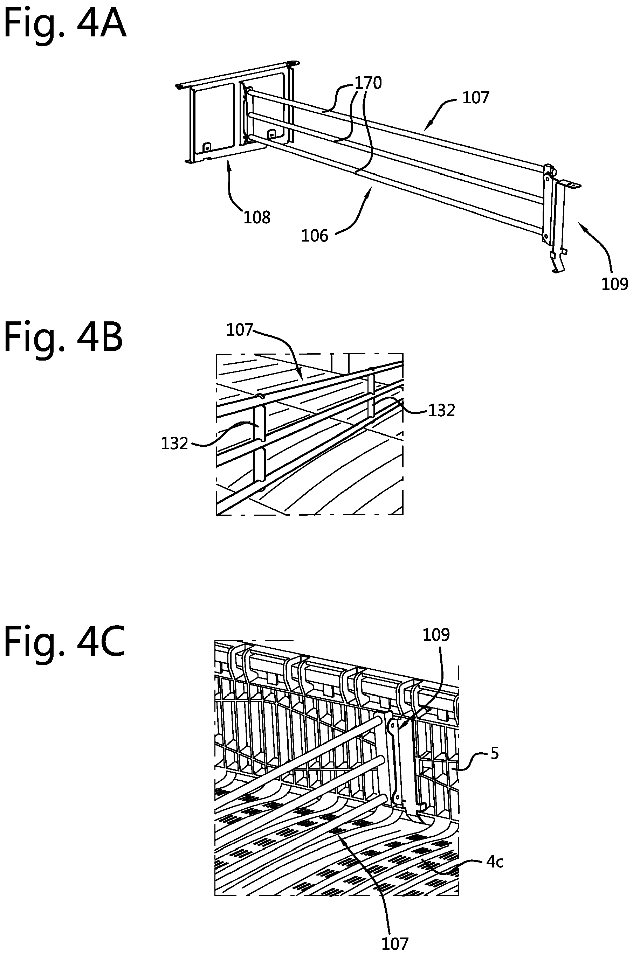

The three round belts 170 of the divider element 107 of container 100 are spaced apart, wherein the divider 107 may optionally have one or more separators 132, in the present example two separators (not shown in figure 1b but shown in figure 4b). The separators 132 connect the round belts 170 together at two intermediate positions along the length of the flexible divider element 107 between the movable side wall segment 5 and the opposite side wall 3b so as to maintain said multiple round belts apart at a predefined mutual distance. One such separator or more than two such separators may be applied instead, which may among others depend on the size of the container. The flexible divider element may be in a pulled taut condition when the bottom wall 2 is closed. Compare to this end figure 5a with figure figure 5b, the flat belt being pulled taut, or at least more straightened, in figure 5b.

The divider 6 of the container 1 as well as the divider 106 of the container 100 comprise a first attachment element 9, 109 for removably attaching the divider 6, 106 to the movable side wall segment 5. The first attachment elements 9 and 109 are identical except for their connection with the divider element 7 and 107 respectively. Dividers 6 and 106 also comprise a second attachment element 8, 108 for removably attaching the divider to the opposite side wall 3b. Also second attachment elements 8, 108 are identical except for their connection with the divider element 7 and 107 respectively. The divider element 7 is attached at one end thereof to the first attachment element 9 and at an opposite, second end thereof to the second attachment element 8, as in particular figures 2a, 2b, 4a and 4c show. The same holds for divider element 107. Both the first and the second attachment elements comprise a hook-shaped element 10 and 11a-11d respectively, for hooking behind a part of the movable side wall segment 5 or opposite side wall 3b, respectively. Both the first and the second attachment elements additionally comprise a deformable lip shaped element 12 and deformable lip shaped elements 13a-13b, respectively, which can be deformed such that each lip shaped element protrudes into a cavity 35 or 34a-34b in the movable side wall segment or opposite side wall, respectively. After hooking the hook-shaped element 10 of the first attachment element 9 behind a part of the movable side wall segment (figure 2d), the lip 12 is bent around another part of the movable side wall segment 5 (figure 2c and figure 2e, the latter showing the actual bending of the lip 12 upon mounting of the divider 6 to the container 1). This effectively and quickly fastens the first attachment element to the movable side wall segment. As can be understood from figures 3a-3f, the second attachment element 8 is first hooked, with hook shaped elements11a-11d behind the above mentioned pins 28 and 29, after which deformable lips 13a, 13b on the second attachment element 8 are bent into cavities 34a, 34b in the side wall 3b, as figures 3e and 3f show.

Other variations to the disclosed embodiments can be understood and effected by those skilled in the art in practicing the claimed invention, from a study of the drawings, the disclosure, and the appended claims. In an example of such a variation a divider may be used instead of dividers 6 or 106, which divider extends perpendicular to the lengthwise direction of dividers 6, 106 as shown in figures 1a and 1b with respect to the associated container 1, 100. More in particular such a divider would extend between side walls 3c and 3d effectively also dividing the receiving space 18 in two subspaces which preferably but not necessarily would be equal in size. Such a divider could for instance be attached at its outer ends to the side walls 3c and 3d in a way similar to the way the dividers 6, 106 are attached to the walls 3a and 3b as described above.

The foregoing description provides embodiments of the invention by way of example only. The scope of the present invention is defined by the appended claims. One or more of the objects of the invention are achieved by the appended claims.

## Claims

1. Container for holding therein live poultry, for use in the transport of live poultry, wherein the container is configured to be stackable so as to form a stack of multiple of such containers, the container having a bottom wall, side walls and an open upper side, the bottom wall and side walls defining a receiving space for the live poultry, wherein the bottom wall has multiple bottom wall segments which can be moved such that the bottom wall is partially opened, wherein at least one of the side walls has a movable side wall segment which is connected to one of the movable bottom wall segments such that the movable side wall segment can be moved together with that movable bottom wall segment such that said one of the side walls is at least partially opened,
wherein the container has a divider for dividing the receiving space in at least two subspaces, the divider having a divider element extending between two opposite side walls of the side walls of the container,
wherein at least some of the bottom wall segments are designed such that they slide on top of each other upon moving the movable side wall segment in the direction of the opposite side wall, wherein the divider element extends between the movable side wall segment and a side wall opposite said movable side wall segment.

2. Container according to claim 1, wherein the divider element extends over a height at least equal to half a height of the container.

3. Container according to claim 1 or 2, wherein the divider element is flexible.

4. Container according to claim 3, wherein the flexible divider element is formed by at least one flexible flat belt, and/or is formed by multiple flexible lines, such as round belts.

5. Container according to claim 4, wherein the flexible divider element comprises multiple spaced apart flexible flat belts or multiple flexible lines, wherein the divider has at least one separator which connects said multiple flat belts or lines together at at least one intermediate position along a length of the flexible divider element so as to maintain said multiple flat belts or lines apart at a predefined mutual distance.

6. Container according to claim 1 or 2, wherein the divider element is a length-adjustable plate.

7. Container according to claim 6, wherein the length-adjustable plate has at least two plate parts slidable alongside each other.

8. Container according to any one of the preceding claims, wherein the divider comprises a first attachment element for removably attaching the divider to a side wall and comprises a second attachment element for removably attaching the divider to the opposite side wall, wherein the divider element is attached at one end thereof to the first attachment element and at an opposite, second end thereof to the second attachment element.

9. Container according to claim 8, wherein the first and/or the second attachment element comprise a hook-shaped element for hooking behind a part of the respective side wall.

10. Container according to claim 9, wherein the first and/or the second attachment element additionally comprise a deformable lip shaped element which can be deformed such that it protrudes into a side wall such as in a cavity therein, preferably after hooking the first and/or the second attachment element to the respective side walls.

11. Container according to any one of the preceding claims, having a metal framework having four upstanding posts at four corners of the bottom wall, which bottom wall is rectangular or square, the posts being connected together by frame bars at least along said opposite side wall.

12. Container according to any one of the preceding claims, the bottom wall and/or side walls comprise polymer grid like panels.

13. Divider configured for a container according to any one of the preceding claims, for dividing the receiving space of the container in at least two subspaces, the divider having a divider element configured to extend between two opposite side walls of the side walls of the container during use.

14. Divider according to claim 13, wherein the divider element is flexible and is formed by at least one flexible flat belt and/or is formed by multiple flexible lines such as round belts, wherein the divider comprises a first attachment element for removably attaching the divider to a side wall and comprises a second attachment element for removably attaching the divider to an opposite side wall of the container, wherein the divider element is attached at one end thereof to the first attachment element and at an opposite, second end thereof to the second attachment element, wherein the first and/or the second attachment element comprise a hook-shaped element for hooking behind a part of the respective side wall, wherein the first and/or the second attachment element additionally comprise a deformable lip shaped element which can be deformed such that it can, in use, protrude into the respective side wall.

15. Use of a divider according to claim 13 or 14 in a container according to any one of the preceding claims 1 - 12, for dividing the receiving space of the container in at least two subspaces.
